# EUROPEAN PATENT SPECIFICATION

(11) **EP 4 443 559 B1**
(45) Date of publication and mention of the grant of the patent: **19.08.2026**
(21) Application number: 24165312.0
(22) Date of filing: 21.03.2024
(51) Int. Cl.: H01M 4/50, H01M 10/22, H01M 10/36

(54) **AQUEOUS SECONDARY BATTERY**
WÄSSRIGE SEKUNDÄRBATTERIE
BATTERIE SECONDAIRE AQUEUSE

(30) Priority: 23.03.2023 JP 2023046682; 20.02.2024 JP 2024023835
(43) Date of publication of application: 09.10.2024
(73) Proprietor: TOYOTA JIDOSHA KABUSHIKI KAISHA, Aichi-ken 471-8571 (JP)
(72) Inventor: SUYAMA, Hiroshi, Toyota-shi, 471-8571 (JP); SATO, Shigeki, Toyota-shi, 471-8571 (JP); TANAKA, Bunta, Toyota-shi, 471-8571 (JP)
(74) Representative: D Young & Co LLP

(56) References cited:
- WO-A1-2014/073702
- US-A1- 2019 386 346
- US-A1- 2022 223 924
- US-B2- 11 075 402

## Description

### FIELD

The present disclosure relates to an aqueous secondary battery.

### BACKGROUND

Non-aqueous batteries comprising flammable non-aqueous electrolytes have a problem in that the number of components is increased as safety measures, resulting in a decrease in energy density per volume of the battery as a whole. Conversely, aqueous batteries comprising non-flammable aqueous electrolytes have various advantages, such as not requiring the safety measures described above, and thus, the energy density per volume thereof can be increased. Therefore, various aqueous secondary batteries are being considered.

A cyanide-based compound referred to as Prussian blue has been proposed as an active material for use in aqueous secondary batteries. For example, Non-Patent Literature 1 discloses an aqueous secondary battery comprising a positive electrode of Fe-substituted Mn-rich Prussian blue KₓFe_{y}Mn_{1-y}[Fe(CN)₆]_{w}·zH₂O.

Patent Literature 1 discloses an aqueous electrolyte for use in aqueous secondary batteries, which comprises water, and potassium pyrophosphate dissolved at a concentration of 2 mol or more per kg of water, as well as an aqueous secondary battery comprising the same.

### [CITATION LIST]

### [PATENT LITERATURE]

[PTL 1] Japanese Unexamined Patent Publication (Kokai) No. 2019-220294

### [NON-PATENT LITERATURE]

[NPL 1] Nature Energy, 2019, Vol. 4, pp. 495-503

### SUMMARY

### [TECHNICAL PROBLEM]

The cyanide-based compound disclosed in Non-Patent Literature 1 may generate cyanide when a battery malfunctions, and may not have sufficient energy density due to the large molecular structure thereof.

The present disclosure aims to provide a novel aqueous secondary battery.

### [SOLUTION TO PROBLEM]

As a result of rigorous investigation, the present disclosers have discovered that the problems described above can be solved by the following means, and have completed the present disclosure. Specifically, the present disclosure is as follows:
<Aspect 1> An aqueous secondary battery, comprising:
   a positive electrode active material layer, an aqueous electrolyte, and a negative electrode active material layer, wherein
   the aqueous electrolyte contains an aqueous solvent and potassium polyphosphate which has two or more elemental phosphorus, and any one of potassium ion, proton, hydroxide ion, and polyphosphoric anion is a carrier ion,
   a positive electrode active material contained in the positive electrode active material layer has a monoclinic crystal structure represented by space group C2/m, is represented by composition formula MnO₂·AₓB_{y}(H₂O)_{z}, and the A, B, and H₂O are present in a space interposed between layers composed of Mn-O octahedrons,
   A is an alkali metal or alkali earth metal,
   B is an anion, $0 < x < 1 ,$ $0 < y < 1 ,$ and $0 < z < 2 .$
<Aspect 2> The aqueous secondary battery according to Aspect 1, wherein A contains at least Na and/or Ba.
<Aspect 3> The aqueous secondary battery according to Aspect 1 or 2, wherein B contains at least Cl⁻.
<Aspect 4> The aqueous secondary battery according to any one of Aspects 1 to 3, wherein the potassium salt is K₄P₂O₇.
<Aspect 5> The aqueous secondary battery according to Aspect 4, wherein the K₄P₂O₇ is dissolved at a concentration of 2 mol or more per kg of water.
<Aspect 6> The aqueous secondary battery according to any one of Aspects 1 to 5, wherein a pH of the aqueous electrolyte is 3 to 13.

### [ADVANTAGEOUS EFFECTS OF INVENTION]

According to the present disclosure, there can be provided a novel aqueous secondary battery.

### BRIEF DESCRIPTION OF DRAWINGS

FIG. 1 is a schematic view of an aqueous secondary battery according to one aspect of the present disclosure.
FIG. 2 is an XRD chart of the positive electrode active material of Example 1.
FIG. 3 is a charge-discharge curve of a cell using the positive electrode active material of Example 1.
FIG. 4 is an XRD chart of the positive electrode active material of Example 2.
FIG. 5 is a charge-discharge curve of a cell using the positive electrode active material of Example 2.
FIG. 6 is a graph showing the relationship between potassium pyrophosphate concentration and ionic conductivity.
FIG. 7 is a graph showing the relationship between potassium pyrophosphate concentration and pH.

### DESCRIPTION OF EMBODIMENTS

### <<Aqueous Secondary Battery>>

The aqueous secondary battery of the present disclosure comprises:
a positive electrode active material layer, an aqueous electrolyte, and a negative electrode active material layer, wherein
the aqueous electrolyte contains an aqueous solvent and potassium polyphosphate which has two or more elemental phosphorus, and any one of potassium ion, proton, hydroxide ion, and polyphosphoric anion is a carrier ion,
a positive electrode active material contained in the positive electrode active material layer has a monoclinic crystal structure represented by space group C2/m, is represented by composition formula MnO₂·AₓB_{y}(H₂O)_{z}, and the A, B, and H₂O are present in a space interposed between layers composed of Mn-O octahedrons,
A is an alkali metal or alkali earth metal,
B is an anion, $0 < x < 1 ,$ $0 < y < 1 ,$ and $0 < z < 2 .$

The present disclosers have discovered that the positive electrode active material having the above configuration can exhibit charging and discharging behavior in an aqueous potassium polyphosphate solution. Though not to be bound by theory, it is believed that by inserting cations of, for example, Na or Ba, anions of, for example, Cl, and water molecules into the space between the layers of the monoclinic manganese oxide structure composed of Mn-O octahedrons, the structure becomes more stable and the space expands, whereby any one of potassium ion, proton, hydroxide ion, and polyphosphoric anion can more easily enter this space, resulting in a larger capacity.

Any one of potassium ion, proton, hydroxide ion, and polyphosphoric anion is present as a carrier ion in the aqueous electrolyte.

The aqueous secondary battery may comprise, for example, an electrolyte layer between a positive electrode and a negative electrode. The electrolyte layer may be composed of a separator and the aqueous electrolyte described above. As the separator, a known separator which can be used in secondary batteries (for example, nickel-metal hydride batteries and zinc-air batteries) can be employed. For example, the separator may be a nonwoven fabric made of cellulose and glass filter. The thickness of the separator is not particularly limited, and may be, for example, 5 µm or more and 1 mm or less.

Each component of the aqueous secondary battery of the present disclosure will be described below.

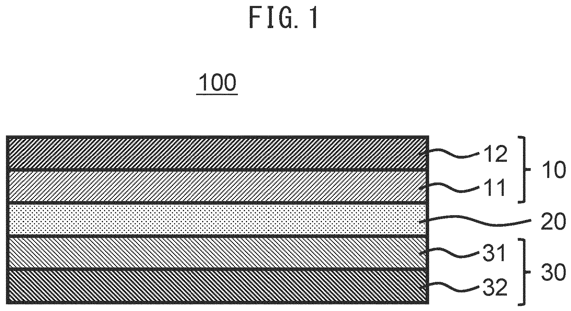

FIG. 1 schematically shows the configuration of an aqueous secondary battery 100 according to a first embodiment of the present disclosure. As shown in FIG. 1, the aqueous secondary battery 100 may comprise a positive electrode 10, a separator 20, and a negative electrode 30. Further, the positive electrode 10 may comprise a positive electrode active material layer 11 and a positive electrode current collector 12, and the negative electrode 30 may include a negative electrode active material layer 31 and a negative electrode current collector 32. In this case, the positive electrode active material layer 11 may include the positive electrode active material described above. Furthermore, though not illustrated, the aqueous electrolyte described above may be included in the positive electrode active material layer 11 and the negative electrode active material layer 31.

### <Positive Electrode Current Collector Layer>

The positive electrode current collector layer may be composed of a known metal or the like which can be used as a positive electrode current collector of a secondary battery. Examples of a such metal include metal materials containing at least one element selected from the group consisting of Cu, Ni, Al, V, Au, Pt, Mg, Fe, Ti, Pb, Co, Cr, Zn, Ge, In, Sn, and Zr. The form of the positive electrode current collector is not particularly limited. Various forms such as foil, mesh, and porous forms can be adopted. The above metal may be vapor-deposited or plated on the surface of a base material.

### <Positive Electrode Active Material Layer>

The positive electrode active material layer contains the positive electrode active material described above. The positive electrode active material layer may further optionally contain a conductive aid, a binder, etc. The thickness of the positive electrode active material layer is not particularly limited, and may be, for example, 0.1 µm or more or 1 µm or more, or 1 mm or less or 100 µm or less.

### (Positive Electrode Active Material)

The positive electrode active material has a monoclinic crystal structure represented by space group C2/m, and is represented by the composition formula MnO2·AₓB_{y}(H₂O)_{z}, in which the above A, the above B, and the above H₂O are present in a space interposed between the layers composed of Mn-O octahedrons.

As used herein, "monoclinic crystal structure represented by space group C2/m" means a crystal structure whose unit lattice is a base-centered crystal lattice having a 2-fold axis and a reflection plane. In the above crystal structure, manganese dioxide having a structure in which A, B, and H₂O are present in the space interposed between the layers composed of Mn-O octahedrons is also referred to as a birnessite-type manganese dioxide.

A is an alkali metal such as Li, Na, or K, or an alkaline earth metal such as Be, Mg, Ca, Sr, or Ba. In particular, A at least contains, and in particular, consists of Na and/or Ba from the viewpoint of battery characteristics.

B is an anion such as OH⁻, O²⁻, CN⁻, or Cl⁻. Among these, it is preferable that B at least contain, and in particular, consist of, Cl⁻ from the viewpoint of battery characteristics.

The value of x in the above composition formula, i.e., the composition ratio of A to Mn, may be greater than 0, 0.1 or more, or 0.2 or more, and may be 1.0 or less, 0.9 or less, 0.8 or less, 0.7 or less, 0.6 or less, 0.5 or less, 0.4 or less, or 0.3 or less. When a plurality of substances are present as A, the value of x may be the sum of the composition ratios of these substances.

The value of y in the above composition formula, i.e., the composition ratio of B to Mn, may be greater than 0 or 0.01 or more, and may be less than 1, 0.90 or less, 0.80 or less, 0.70 or less, 0.60 or less, 0.50 or less, 0.40 or less, 0.30 or less, 0.20 or less, 0.10 or less, 0.08 or less, 0.06 or less, 0.05 or less, 0.04 or less, 0.03 or less, or 0.02 or less. When a plurality of substances are present as B, the value of y may be the sum of the composition ratios of these substances.

The value of z in the above composition formula, i.e., the composition ratio of H₂O to Mn, may be greater than 0, 0.1 or more, or 0.2 or more, and may be 2.0 or less, 1.7 or less, 1.5 or less, 1.3 or less, 1.1 or less, 1.0 or less, 0.9 or less, 0.8 or less, 0.7 or less, 0.6 or less, 0.5 or less, 0.4 or less, or 0.3 or less.

The positive electrode active material described above can be produced by, for example, the following method.
1. An aqueous solution of a Mn²⁺ source, for example, MnCl₂, and optional alkali metals and/or alkali metal salts is obtained and deoxygenated at a low temperature.
2. An alkali metal or alkaline earth metal hydroxide, such as NaOH, is added to the deoxygenated aqueous solution and mixed to obtain a cloudy slurry.
3. Oxygen is fed into this slurry, causing the slurry to turn black via oxidation reaction.
4. The blackened slurry is filtered and washed with water, and the resulting precipitate is dried.

The content of the positive electrode active material is not particularly limited, and may be, for example, relative to the mass of the positive electrode active material layer, 20% by mass or more, 30% by mass or more, 40% by mass or more, 50% by mass or more, 60% by mass or more, or 70% by mass or more, and 99% by mass or less, 97% by mass or less, 95% by mass or less, 92% by mass or less, 90% by mass or less, 88% by mass or less, 85% by mass or less, 83% by mass or less, or 80% by mass or less.

### (Conductivity Aid)

As the conductive aid optionally included in the positive electrode active material layer, any known conductive aid used in secondary batteries can be employed. Examples thereof include carbon materials. Specifically, ketjen black (KB), vapor grown carbon fiber (VGCF), acetylene black (AB), carbon nanotubes (CNT), carbon nanofibers (CNF), carbon black, coke, and graphite. Alternatively, it may be a metal material which can withstand the environment during use of the battery. One type of conductive aid may be used alone, or two or more types may be used in combination. The conductive aid may be in various forms, such as powder and fiber forms.

The amount of the conductive aid contained in the positive electrode active material layer is not particularly limited, and may be, for example, 1% by mass or more, 3% by mass or more, 5% by mass or more, 7% by mass or more, 10% by mass or more, or 15% by mass or more, and may be 30% by mass or less, 28% by mass or less, or 25% by mass or less.

### (Binder)

As the binder optionally included in the positive electrode active material layer, any known binder which can be used in secondary batteries can be employed. For example, styrene-butadiene rubber (SBR)-based binders, carboxymethyl cellulose (CMC)-based binders, acrylonitrile-butadiene rubber (ABR)-based binders, butadiene rubber (BR)-based binders, polyvinylidene fluoride (PVDF)-based binders, and polytetrafluoroethylene (PTFE)-based binders. One binder may be used alone, or two or more binders may be used in combination.

The amount of binder contained in the positive electrode active material layer is not particularly limited, and may be, for example, 1% by mass or more, 2% by mass or more, 3% by mass or more, or 4% by mass or more, and may be 20% by mass or less, 18% by mass or less, 15% by mass or less, 12% by mass or less, 10% by mass or less, or 7% by mass or less.

### <Aqueous Electrolyte>

The aqueous electrolyte contains an aqueous solvent and an potassium polyphosphate which has two or more elemental phosphorus. In the aqueous electrolyte, any one of potassium ion, proton, hydroxide ion, and polyphosphoric anion is present as a carrier ion.

The pH of the aqueous electrolyte may be 3 or more, 4 or more, 5 or more, 6 or more, 7 or more, 8 or more, 9 or more, or 10 or more, and may be 13 or less, 12 or less, or 11 or less.

### (Aqueous Solvent)

The aqueous solvent is a solvent containing water. The aqueous solvent can contain water as a main component. Specifically, water can account for 50 mol% or more, 70 mol% or more, 90 mol% or more, or 95 mol% or more, based on the total amount of the aqueous solvent constituting the electrolytic solution (100 mol%). The upper limit of the proportion of water in the aqueous solvent is not particularly limited, and the aqueous solvent may be 100 mol%, i.e., the entire amount may be water.

The aqueous solvent may consist only of water, but may also contain other components, for example, one or more organic solvents selected from ethers, carbonates, nitriles, alcohols, ketones, amines, amides, sulfur compounds, and hydrocarbons. The solvent other than water may account for 50 mol% or less, 30 mol% or less, 10 mol% or less, or 5 mol% or less, based on the total amount of the aqueous solvent constituting the electrolytic solution (100 mol%).

### (Potassium Polyphosphate)

The potassium polyphosphate is an electrolyte dissolved in the aqueous solvent. This potassium polyphosphate has two or more elemental phosphorus.

The potassium polyphosphate may be, for example, potassium pyrophosphate.

In order for the electrolyte to be "dissolved" in the aqueous solvent, it is not necessary that the electrolyte be completely ionized. For example, in the case of potassium polyphosphate, the potassium polyphosphate need not be completely ionized into potassium ions and polyphosphate ions in the aqueous electrolyte. Specifically, in the case of potassium pyrophosphate, in the aqueous electrolyte, the "potassium pyrophosphate dissolved" may be present as ions derived exclusively from ionization of potassium pyrophosphate such as K⁺, P₂O₇⁴⁻, KP₂O₇³⁻, K₂P₂O₇²⁻, and K₃P₂O₇⁻, ions derived from the interaction between this ionization and water molecule such as HP₂O₇³⁻ , H₂P₂O₇²⁻ , H₃P₂O₇⁻ , HKP₂O₇²⁻ , H₂KP₂O₇⁻ , HK₂P₂O₇⁻ or aggregates of these ions. Furthermore, in the aqueous electrolyte, the "potassium pyrophosphate dissolved" need not be derived from a salt of potassium and pyrophosphoric acid (K₄P₂O₇) (obtained by adding K₄P₂O₇ to water). For example, the aqueous electrolyte also includes electrolytes in which a potassium ion source (e.g., KOH or CH₃COOK) and a pyrophosphate ion source (e.g., H₄P₂O₇) are separately added to water and dissolved, resulting in the formation of the above ions and aggregates in the water.

The concentration of the potassium polyphosphate in the aqueous electrolyte is not particularly limited, and may be appropriately selected in accordance with the desired performance of the battery.

In the aqueous electrolyte, the potassium polyphosphate may be dissolved in water at a concentration of 2.0 mol or more, 3.0 mol or more, 4.0 mol or more, or 5.0 mol or more per kg of water. Such a concentration is preferable from the viewpoint of exhibiting the characteristics of improving oxidation and reduction resistance specific to a concentrated aqueous solution system referred to as "water-in-salt."

According to the new findings of the present disclosers, the higher the concentration of potassium polyphosphate in the aqueous electrolyte, the smaller the hysteresis during charging and discharging of the positive electrode active material, whereby high performance as a potassium ion secondary battery can easily be obtained. Furthermore, the higher the concentration of potassium polyphosphate in the aqueous electrolyte, the lower the overvoltage, and the more likely a suitable charge/discharge plateau is to occur. Moreover, it appears that the higher the concentration of potassium polyphosphate in the aqueous electrolyte, the easier it is for polyphosphate ions and potassium ions to come close to each other and form aggregates. Thus, when charging a potassium ion secondary battery, for example, polyphosphate ions are likely to be dragged by potassium ions and easily move toward the negative electrode side. It is believed that the polyphosphate ions that reach the negative electrode bring about an interaction at high work function sites on the surface of the negative electrode, and as a result, direct contact between the aqueous electrolyte and the high work function sites on the surface of the negative electrode is suppressed, whereby electrolysis of the aqueous electrolyte is easily suppressed.

The concentration of the "potassium polyphosphate dissolved" in the aqueous electrolyte can be specified as follows. For example, the elements and ions contained in the aqueous electrolyte are identified via elemental analysis or ion analysis, the potassium ion concentration, polyphosphate ion concentration, etc., in the aqueous electrolyte are identified, and the identified ion concentration is converted to a potassium polyphosphate concentration. Alternatively, the solvent is removed from the aqueous electrolyte, the solid content is chemically-analyzed, and is converted to a potassium polyphosphate concentration.

In the aqueous electrolyte, all of the potassium ions contained in the electrolyte need not be converted into "potassium polyphosphate dissolved". Specifically, the aqueous electrolyte may contain more potassium ions than the concentration that can be converted into potassium polyphosphate. For example, when producing the aqueous electrolyte, when a potassium ion source other than the potassium polyphosphate source (for example, KOH, CH₃COOK, and K₃PO₄) is added to water together with the potassium polyphosphate source and dissolved, the aqueous electrolyte contains more potassium ions than the concentration that can be converted into potassium polyphosphate.

The aqueous electrolyte may contain cations other than potassium ions. For example, it may contain alkali metal ions other than potassium ions, alkaline earth metal ions, and transition metal ions. The aqueous electrolyte may contain anions other than anions present in a state bound to a cation. When the potassium polyphosphate is potassium pyrophosphate, such anions as described above, such anion may be in addition to P₂O₇⁴⁻, KP₂O₇³⁻, K₂P₂O₇²⁻, K₃P₂O₇⁻, HP₂O₇³⁻, H₂P₂O₇²⁻ , H₃P₂O₇ , HKP₂O₇²⁻ , H₂KP₂O₇⁻ , and HK₂P₂O₇⁻ .Further, the aqueous electrolyte may contain for example anions derived from the other electrolytes described below.

Other electrolytes may be dissolved in the aqueous electrolyte of the present disclosure. For example, KPF₆, KBF₄, K₂SO₄, KNO₃, CH₃COOK, (CF₃SO₂)₂NK, KCF₃SO₃, (FSO₂)₂NK, K₂HPO₄, and KH₂PO₄ may be dissolved. The other electrolytes may account for 50 mol% or less, 30 mol% or less, 10 mol% or less, 5 mol% or less, or 1 mol% or less, based on the total amount of electrolyte dissolved in the electrolytic solution (100 mol%).

### <Negative Electrode Current Collector Layer>

The negative electrode current collector layer may be composed of a known metal or the like that can be used as a negative electrode current collector of a secondary battery. Examples of such a metal include a metal material containing at least one element selected from the group consisting of Cu, Ni, Al, V, Au, Pt, Mg, Fe, Ti, Pb, Co, Cr, Zn, Ge, In, Sn, and Zr. In particular, when considering stability in the aqueous electrolyte, the negative electrode current collector may contain at least one element selected from the group consisting of Al, Ti, Pb, Zn, Sn, Mg, Zr, and In, may contain at least one element selected from the group consisting of Ti, Pb, Zn, Sn, Mg, Zr and In, and may contain Ti. Even if coming into contact with an aqueous electrolyte, Al, Ti, Pb, Zn, Sn, Mg, Zr, and In, each having a low work function, appear unlikely to cause electrolyte of the aqueous electrolyte.

The form of the negative electrode current collector is not particularly limited. Various forms such as foil, mesh, and porous forms can be adopted. The above metal may be vapor-deposited or plated on the surface of a base material.

The surface of the negative electrode current collector may be coated with a carbon material. Specifically, the negative electrode may further comprise a coating layer provided on the negative electrode current collector and the surface of the negative electrode current collector where the aqueous electrolyte is arranged (between the negative electrode current collector and the negative electrode active material layer), and the coating layer may contain a carbon material. Examples of the carbon material include ketjen black (KB), vapor grown carbon fiber (VGCF), acetylene black (AB), carbon nanotubes (CNT), carbon nanofibers (CNF), carbon black, coke, and graphite.

The thickness of the coating layer is not particularly limited. Furthermore, the coating layer may be provided on the entire surface of the negative electrode current collector or may be provided on a part of the surface.

The coating layer may contain a binder for binding the carbon materials to each other and the carbon material to the negative electrode current collector.

When a coating layer containing a carbon material is provided on the surface of the negative electrode current collector, the withstand voltage on the reduction side of the aqueous electrolyte is easily improved. It is considered that since the edge portion of the carbon material has high reaction activity, the anions contained in the aqueous electrolyte, such as polyphosphate ions, are easily adsorbed and decomposed, and a film is likely to bring about an interaction. Thus, it is believed that when the aqueous electrolyte is used in a secondary battery, the edge part of the carbon material is inactivated and electrolysis of aqueous electrolyte at the edge part can be suppressed, and as a result, the reduction side potential window of aqueous electrolyte is expanded.

### <Negative Electrode Active Material Layer>

The negative electrode active material layer contains a negative electrode active material. Further, the negative electrode active material layer may contain a conductive aid or a binder in addition to the negative electrode active material. The thickness of the negative electrode active material layer is not particularly limited, and may be, for example, 0.1 µm or more or 1 µm or more, or 1 mm or less or 100 µm or less.

The negative electrode active material included in the negative electrode active material layer may be selected from among active materials whose carrier ion charge/discharge potential is lower than that of the positive electrode active material described above, taking into consideration the potential window of the aqueous electrolyte. For example, potassium-transition metal composite oxides; titanium oxides; metal sulfides such as Mo₆S₈; elemental sulfur; KTi₂(PO₄)₃; and NASICON-type compounds; WO₃; a hydrogen storage alloy; an inorganic compound having crystal structure represented by space group I23. The inorganic compound having crystal structure represented by space group I23 can contain element A, element M and O, wherein the element A is at least one of Bi and La, and wherein M is any one of Bi, Mn, Fe, Co and Ni. Only one type of negative electrode active material may be used alone, or two or more types may be used in combination.

The shape of the negative electrode active material is not particularly limited, and may be, for example, particulate. The particle size in this case is not particularly limited, and an appropriate size may be selected in accordance with the design of the battery. The primary particle diameter of the negative electrode active material may be 1 nm or more, 5 nm or more, 10 nm or more, 50 nm or more, or 100 nm or more, and may be 500 µm or less, 100 µm or less, 50 µm or less, 30 µm or less, or 10 µm or less. Furthermore, the primary particles of the negative electrode active material may aggregate to form secondary particles. In this case, the particle diameter of the secondary particles is not particularly limited, and may be, for example, 100 nm or more, 500 nm or more, or 1 µm or more, and 1000 µm or less, 500 µm or less, 100 µm or less, 50 µm or less, 30 µm or less, or 20 µm or less.

The amount of negative electrode active material contained in the negative electrode active material layer is not particularly limited. For example, based on the entire negative electrode active material layer (100% by mass), the negative electrode active material may be contained at a proportion of 20% by mass or more, 40% by mass or more, 60% by mass or more, or 70% by mass or more, and 99% by mass or less, 97% by mass or less, or 95% by mass or less.

The types of conductive aids and binders which can be optionally included in the negative electrode active material layer are not particularly limited, and can be appropriately selected from among, for example, the conductive aids and binders which can optionally be included in the positive electrode active material layer. The amounts of the conductive aid and binder contained in the negative electrode active material layer are not particularly limited. Refer to the amounts described regarding the positive electrode active material layer.

### <Other Structures>

In addition to the structures described above, the secondary battery may comprise other structures that are obvious as a battery, such as terminals, a battery case, etc.

A secondary battery with the above configuration can be produced by, for example, forming a positive electrode active material layer on the surface of a positive electrode current collector in a dry or wet manner to obtain a positive electrode, forming a negative electrode active material layer on the surface of a negative electrode current collector in a dry or wet manner to obtain a negative electrode, and arranging a separator between the positive electrode and the negative electrode and impregnating them with aqueous electrolyte.

### EXAMPLES

The present disclosure will be specifically described using Examples and Comparative Examples, but the present disclosure is not limited thereto.

### <<Preparation of Positive Electrode Active Material>>

### <Example 1>

Ion-exchanged water was added to 19.8 g of manganese(II) chloride tetrahydrate to prepare 200 ml of a 0.5 mol/L manganese chloride aqueous solution. Ion-exchanged water was then added to 109 g of a 50 w/w% sodium hydroxide aqueous solution to prepare 250 ml of a 5.5 mol/L sodium hydroxide aqueous solution.

The manganese chloride aqueous solution was transferred to a 1-L stirring container capable of gas flow, further set in a cooling bath, the temperature was cooled to 10 °C or lower, and Ar gas was bubbled while stirring to expel the air in the container. While maintaining the temperature and stirring with gas bubbling, the aqueous sodium hydroxide solution prepared above was added thereto and mixed over 15 minutes using a roller pump to form a cloudy slurry.

Thereafter, the gas pipe was reconnected to the air pump, air was fed at a rate of 6 L/min, and bubbling was continued for 20 hours or longer to turn the slurry black and promote the oxidation reaction.

After the reaction was completed, filtration was performed using a Buchner funnel, and water washing was performed with an AgNO₃ aqueous solution to the extent that no white precipitate of AgCl was generated.

The obtained wet cake was thoroughly dried in a hot air dryer at 80 °C over a day and night, and then classified using a standard sieve with a mesh size of 38 µm to obtain an active material powder.

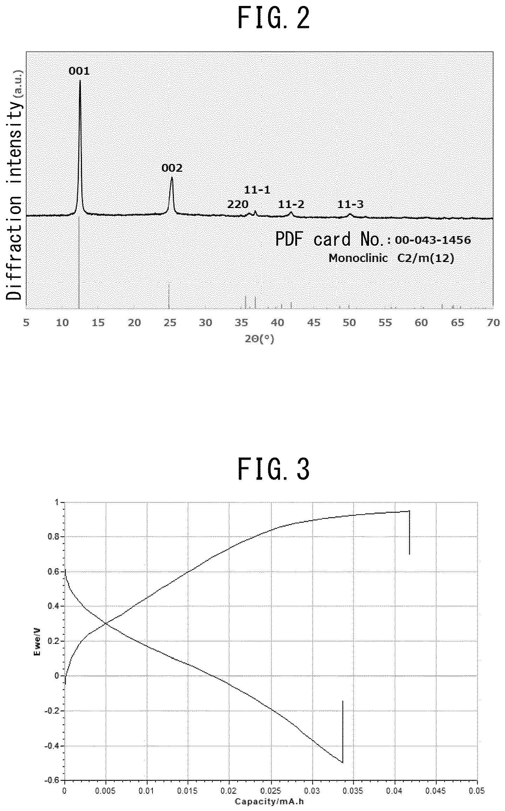

This was identified by XRD measurement as MnO2 having a layered structure represented by space group C2/m. An XRD chart of the positive electrode active material of Example 1 is shown in FIG. 2.

ICP measurement revealed that Na was present at a composition ratio of Na/Mn = 0.27 and that Cl was present at 0.4% by mass.

### < Example 2>

The active material powder of Example 2 was obtained in the same manner as Example 1, except that in place of the 200 ml of the manganese chloride aqueous solution described above, 200 ml of a 0.5 mol/L manganese chloride/barium mixed aqueous solution obtained by adding ion-exchanged water to 17.8 g of manganese(II) chloride tetrahydrate and 2.44 g of barium chloride dihydrate was used.

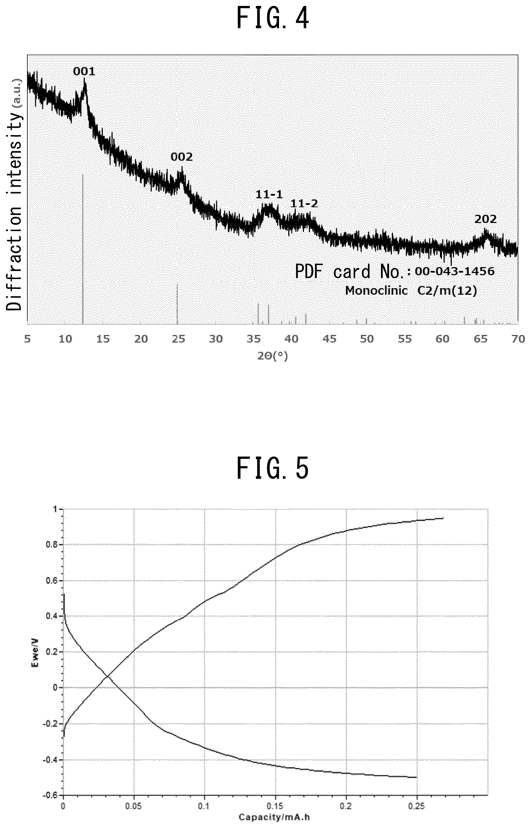

This was identified by XRD measurement as MnO₂ having a layered structure represented by space group C2/m. An XRD chart of the positive electrode active material of Example 2 is shown in FIG. 4.

ICP measurement revealed that Ba was present at a composition ratio of Ba/Mn = 0.11, Na was present at a composition ratio of Na/Mn = 0.09, and Cl was present at a composition ratio of 0.5% by mass.

### <<Preparation of Positive Electrode>>

Approximately 75 parts by mass of the positive electrode active material powder of Example 1, approximately 20 parts by mass of acetylene black as a conductive aid, and approximately 5 parts by mass of polyvinylidene fluoride (PVDF) as a binder were mixed to form a positive electrode active material mixture. Next, using a doctor blade, the positive electrode active material mixture was uniformly applied to the surface of a Ni foil and dried to obtain an evaluation positive electrode. Specifically, in the positive electrode, a positive electrode active material layer containing the positive electrode active material was formed on the surface of the Ni foil as a positive electrode current collector. Regarding Example 2, an evaluation positive electrode was similarly produced.

### <<Preparation of Evaluation Cell>>

An evaluation cell having the following configuration was produced.
Cell: VM4 (EC Frontier)
Working electrode: positive electrode coating film
Counter electrode: Pt mesh
Reference electrode: Ag/AgCl
Electrolyte: 5.0 mol/kg potassium pyrophosphate (K₄P₂O₇) aqueous solution

### <<Cell Evaluation>>

The evaluation cells were charged and discharged under the following conditions to evaluate the charging and discharging characteristics thereof.
Charge/discharge current value: 0.2 mA/cm²
Cut voltage: -0.5 to 0.95 V vs. Ag/AgCl
Measurement temperature: 25 °C

The charge-discharge curves of Examples 1 and 2 are shown in FIGS. 3 and 5, respectively.

### < <Reference Examples 1 and 2>>

### <Reference Example 1>

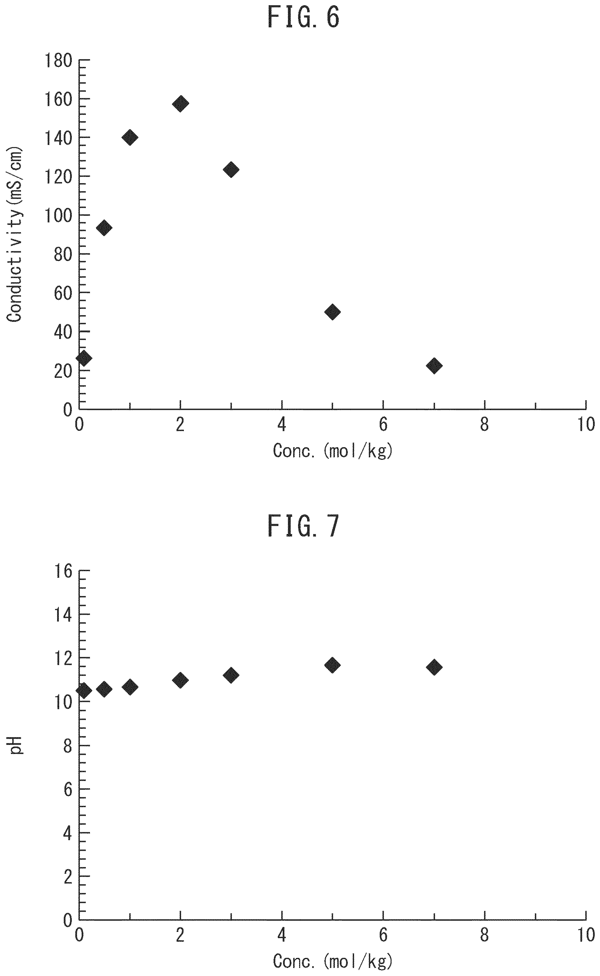

The relationship between the concentration of the potassium pyrophosphate aqueous solution and the ion conductivity is shown in FIG. 6.

The potassium pyrophosphate aqueous solution had ion conductivity within the range of the concentration of potassium pyrophosphate in the potassium pyrophosphate aqueous solution of from greater than 0 mol/kg to 8 mol/kg or less.

### <Reference Example 2>

The relationship between the concentration and pH of the potassium pyrophosphate aqueous solution is shown in FIG. 7.

When the concentration of potassium pyrophosphate in the potassium pyrophosphate aqueous solution was greater than 0 mol/kg and 8 mol/kg or less, the pH of the potassium pyrophosphate aqueous solution was 10.0 to 12.0.

### REFERENCE SIGNS LIST

- 10: positive electrode
- 11: positive electrode active material layer
- 12: positive electrode current collector
- 20: separator
- 30: negative electrode
- 31: negative electrode active material layer
- 32: negative electrode current collector
- 100: aqueous secondary battery

## Claims

1. An aqueous secondary battery, comprising:
a positive electrode active material layer, an aqueous electrolyte, and a negative electrode active material layer, wherein
the aqueous electrolyte contains an aqueous solvent and potassium polyphosphate which has two or more elemental phosphorus, and any one of potassium ion, proton, hydroxide ion, and polyphosphoric anion is a carrier ion,
a positive electrode active material contained in the positive electrode active material layer has a monoclinic crystal structure represented by space group C2/m, is represented by composition formula MnO₂·AₓB_{y}(H₂O)_{z}, and the A, B, and H₂O are present in a space interposed between layers composed of Mn-O octahedrons,
A is an alkali metal or alkali earth metal,
B is an anion, $0 < x < 1 ,$ $0 < y < 1 ,$ and $0 < z < 2 .$

2. The aqueous secondary battery according to Claim 1, wherein A contains at least Na and/or Ba.

3. The aqueous secondary battery according to Claim 1 or 2, wherein B contains at least Cl⁻.

4. The aqueous secondary battery according to Claim 1 or 2, wherein the potassium salt is K₄P₂O₇.

5. The aqueous secondary battery according to Claim 4, wherein the K₄P₂O₇ is dissolved at a concentration of 2 mol or more per kg of water.

6. The aqueous secondary battery according to Claim 1 or 2, wherein a pH of the aqueous electrolyte is 3 to 13.

## Patentansprüche

1. Wässrige Sekundärbatterie, umfassend:
eine Positivelektroden-Aktivmaterialschicht, einen wässrigen Elektrolyt und eine Negativelektroden-Aktivmaterialschicht, wobei
der wässrige Elektrolyt ein wässriges Lösungsmittel und Kaliumpolyphosphat, das zwei oder mehr Phosphorelemente aufweist, enthält und eines von Kaliumion, Proton, Hydroxidion und Polyphosphorsäureanion ein Trägerion ist,
ein Positivelektroden-Aktivmaterial, das in der Positivelektroden-Aktivmaterialschicht enthalten ist, eine durch die Raumgruppe C2/m wiedergegebene monokline Kristallstruktur aufweist und durch die Zusammensetzungsformel MnO₂·AₓB_{y}(H₂O)_{z} wiedergegeben wird und das A, B und H₂O in einem Raum zwischen Schichten, die aus Mn-O-Oktaedern bestehen, vorliegen,
A für ein Alkalimetall oder Erdalkalimetall steht,
B für ein Anion steht, $0 < x < 1 ,$ $0 < y < 1$ und $0 < z < 2 .$

2. Wässrige Sekundärbatterie nach Anspruch 1, wobei A mindestens Na und/oder Ba enthält.

3. Wässrige Sekundärbatterie nach Anspruch 1 oder 2, wobei B mindestens Cl⁻ enthält.

4. Wässrige Sekundärbatterie nach Anspruch 1 oder 2, wobei es sich bei dem Kaliumsalz um K₄P₂O₇ handelt.

5. Wässrige Sekundärbatterie nach Anspruch 4, wobei das K₄P₂O₇ in einer Konzentration von 2 mol oder mehr pro kg Wasser gelöst ist.

6. Wässrige Sekundärbatterie nach Anspruch 1 oder 2, wobei ein pH-Wert des wässrigen Elektrolyts 3 bis 13 beträgt.

## Revendications

1. Batterie secondaire aqueuse comprenant :
une couche de matériau actif d'électrode positive, un électrolyte aqueux, et une couche de matériau actif d'électrode négative, dans laquelle
l'électrolyte aqueux contient un solvant aqueux et du polyphosphate de potassium qui possède au moins deux éléments phosphore, et l'un quelconque parmi un ion potassium, un proton, un ion hydroxyde, et un anion polyphosphorique est un ion porteur,
un matériau actif d'électrode positive contenu dans la couche de matériau actif d'électrode positive a une structure cristalline monoclinique représentée par le groupe d'espace C2/m, est représenté par la formule de composition MnO₂·AₓB_{y}(H₂O)_{z}, et les A, B et H₂O sont présents dans un espace interposé entre des couches composées d'octaèdres de Mn-O,
A est un métal alcalin ou un métal alcalino-terreux,
B est un anion, $0 < x < 1 ,$ $0 < y < 1 ,$ et $0 < z < 2 .$

2. Batterie secondaire aqueuse selon la revendication 1, dans laquelle A contient au moins Na et/ou Ba.

3. Batterie secondaire aqueuse selon la revendication 1 ou 2, dans laquelle B contient au moins Cl⁻.

4. Batterie secondaire aqueuse selon la revendication 1 ou 2, dans laquelle le sel de potassium est K₄P₂O₇.

5. Batterie secondaire aqueuse selon la revendication 4, dans laquelle le K₄P₂O₇ est dissous à une concentration de 2 moles ou plus par kg d'eau.

6. Batterie secondaire aqueuse selon la revendication 1 ou 2, dans laquelle le pH de l'électrolyte aqueux est de 3 à 13.
